# EUROPEAN PATENT APPLICATION

(11) **EP 3 425 238 A1**
(43) Date of publication of application: **09.01.2019**
(21) Application number: 17180186.3
(22) Date of filing: 07.07.2017
(51) Int. Cl.: F16H 3/42

(54) **COGWHEEL AND GEARING MECHANISM HEREWITH**

(71) Applicant: Kontopoulos, Grigorios, 60596 Frankfurt am Main (DE); Kontopoulos, Florentina, 60596 Frankfurt am Main (DE)
(72) Inventor: Kontopoulos, Konstantinos, 60596 Frankfurt am Main (DE)
(74) Representative: Keil & Schaafhausen Patent- und Rechtsanwälte PartGmbB

(57) **Abstract**

The present invention refers to a cogwheel, to a gearing mechanism with such a cogwheel and to the use of a cogwheel and/or gearing mechanism. The cogwheel (1, 1') has an axis, a first axial end, an axially opposite second axial end and a pitch surface extending between the first axial end and the second axial end. The pitch surface comprises several teeth (1a) which are spaced by grooves (1 b) and wherein the pitch surface is at least substantially cone-shaped such that the diameter of the pitch surface at the first axial end is smaller than the diameter of the pitch surface at the second axial end. The circular pitch and the circular thickness of the teeth (1a) are at least substantially constant and that the number of grooves (1 b) at the first axial end is smaller than the number of grooves (1b) at the second axial end such that some of the teeth (1 a) and some of the grooves (1 b) merge between the first axial end and the second axial end.

## Description

The present invention refers to a cogwheel and a gearing mechanism with such a cogwheel. In more detail, the invention refers to a cone shaped cogwheel for a gearing mechanism and its use in a stationary machine or a vehicle.

Cone shaped cogwheels are typically used in bevel gears where the axes of the two shafts carrying the respective cogwheels intersect and the tooth-bearing faces of the cogwheels themselves are conically shaped. A cone-shaped cogwheel is typically defined inter alia by its pitch surface and its pitch angle. The pitch surface of a cogwheel is the imaginary toothless surface resulting from averaging out the peaks and valleys of the individual teeth, i.e. the protruding portions of the teeth and the grooves spacing the protruding portions of the teeth. While the pitch surface of an ordinary cogwheel has the shape of a cylinder, cone-shaped cogwheels have a conically shaped pitch surface. The pitch angle of a cogwheel is defined as the angle between the face of the pitch surface and the axis of the cogwheel.

Cone-shaped cogwheels for bevel gears may have straight grooves and teeth to form a straight bevel gear. Due to the conical shape, either the circular pitch and/or the circular thickness of the teeth and/or the grooves of such a cogwheel have to change from one axial end of the cogwheel to the opposite axial end of the cogwheel. The circular thickness is the maximum width of one tooth in the circular direction as seen parallel to the axis of the cogwheel. In contrast to that, the circular pitch is defined as the distance from one face of a groove (or tooth) to the corresponding face of an adjacent groove (or tooth) on the same cogwheel, for example measured along the pitch circle of the cogwheel. In other words, the circular pitch defines a measure for a distance between two of a plurality of grooves uniformly distributed about a circular line on the outer surface, wherein the circular line is in a plane which is perpendicular to the axis of the cogwheel.

Further, continuously variable transmissions (CVT) are known that can change seamlessly through a continuous range of effective gear ratios. As an example, US 760 460 describes a cone ring transmission with two cones of opposite taper arranged on parallel axes which are coupled by a displaceable ring interposed between the cones. The torque is transmitted between the cones by friction of the ring. While such continuously variable transmissions are not limited to a fixed number of gear ratios and benefit from a compact size with a low number of component parts, drawbacks of such friction based transmission are a reduced efficiency and limitations due to heat generation.

It is, thus, an object of the present invention to provide a cogwheel and a gearing mechanism avoiding the drawbacks of known continuously variable transmissions and mechanical transmissions.

This object is solved by a cogwheel according to claim 1 and a gearing mechanism according to claim 5.

Typically, a cone shaped cogwheel has an axis, a first axial end, an axially opposite second axial end and a cone-shaped pitch surface extending between the first axial end and the second axial end, wherein the pitch surface comprises several, preferably uniformly distributed, grooves which are spaced by tooth-like web portions. With the cone-shaped pitch surface, the diameter (perpendicular to the axis) of the pitch surface at the first axial end is smaller than the diameter (perpendicular to the axis) of the pitch surface at the second axial end. According to one aspect of the present invention, the circular pitch of the grooves, and preferably also the circular thickness of the teeth and grooves, of the cogwheel are constant or substantially constant, while the number of grooves at the first axial end is smaller than the number of grooves at the second axial end such that some of the grooves (and some of the tooth-like web portions) merge between the first axial end and the second axial end. In other words, in contrast to known cone-shaped cogwheels, where the different diameters of the pitch surface at the different axial positions are compensated by changing the circular pitch and/or the circular thickness of the teeth and/or grooves, the number of teeth and grooves changes in the cogwheel of the present invention depending on the axial position, thereby compensating the different diameters of the pitch surface.

The present invention is based on the idea that different transmission ratios may be selected on a single cone-shaped cogwheel with the above-mentioned arrangement of teeth and grooves by engaging a torque transmitting counter element at different axial positions of the cogwheel having different numbers of grooves and teeth. This allows providing several different defined transmission ratios with only two component parts, namely the cone-shaped cogwheel and the further torque transmitting element, requiring relatively limited space.

As mentioned above, the pitch angle of a cogwheel is the angle between the pitch surface and the axis. According to an embodiment of the invention, the pitch angle of the cogwheel is less than 90°, i.e. the cogwheel is an, e.g. truncated, cone with the teeth provided at a radially outer surface of the cogwheel. In an alternative embodiment of the invention, the pitch angle of the cogwheel is more than 90° resulting in an, e.g. bell-shaped, cogwheel with the teeth provided at a radially inner surface.

The circular pitch of the grooves is constant at different axially spaced working positions, while it may slightly vary outside the working positions for example at the axial positions where the grooves merge. Each working position corresponds to a plane perpendicular to the axis, wherein the working positions differ in the diameter of the cone-shaped cogwheel at the respective position or plane and, thus, differ in the number of grooves uniformly distributed over the circumference of the cogwheel. Each working position corresponds to a defined gear ratio between the cogwheel and a further torque transmitting element with a fixed number of groove engaging members, e.g. balls.

According to a further aspect of the present invention, a cone-shaped cogwheel is provided with grooves between the teeth which are formed for receiving at least one torque transmitting ball. In other words, the grounds of the grooves may have the form of for example half cylinders. As an alternative, other, preferably rounded, groove shapes suitable for receiving at least one ball in a torque transmitting manner are also appropriate.

A gearing mechanism for transmitting torque from a first shaft to a second shaft comprises according to the invention at least one cogwheel, preferably as defined above, which is rotationally fixed to the first shaft and at least one further torque transmitting element which is rotationally fixed to the second shaft and meshes with the cogwheel.

According to an embodiment of the invention, the first shaft of the gearing mechanism is inclined with respect to the second shaft of the gearing mechanism, for example such that the first shaft and the second shaft form an acute angle. If the axes of the shafts are inclined relative to each other, the second shaft preferably extends parallel to the pitch surface of the cogwheel. In an alternative arrangement, the axes of the shafts may extend parallel to each other.

A very effective way of transmitting torque is the use of torque transmitting balls like in ball splines or ball joints. In a gearing mechanism the at least one further torque transmitting element may comprise a cage retaining several torque transmitting balls. Preferably, each ball extends partially through a respective radially open window of the cage. In other words, the balls are received in the cage such that torque may be transmitted via the balls to the cage but of the balls may be rotatable within the cage. The cage may be directly or indirectly rotationally fixed to the second shaft.

For switching between different transmission ratios, the gearing mechanism preferably comprises a switching mechanism. The switching mechanism for switching between different gear ratios of the first shaft and the second shaft, may comprise at least one drive component for changing the position of the at least one further torque transmitting element with respect to the cogwheel. The drive component may be a simple actuator for shifting the at least one further torque transmitting element between predefined positions or may be a more complex drive system comprising for example a control unit for changing the position of the at least one further torque transmitting element according to respective control commands.

In a further development of this embodiment, the switching mechanism may comprise a locking mechanism for locking the at least one further torque transmitting element in at least two different predefined positions with respect to the cogwheel. The at least two different predefined positions correspond to at least two different transmission ratios.

The at least one further torque transmitting element may be displaceable with respect to the cogwheel in a direction parallel to the second shaft. In some embodiments of the gearing mechanism this may be parallel to the pitch surface of the cogwheel. In more detail, the second shaft may be at least partially mounted in a hollow switching shaft which is axially constrained to the cage and rotatable relative to the cage.

A very compact design of the gearing mechanism may be provided with the cogwheel being bell-shaped with a pitch angle of more than 90°, wherein the at least one further torque transmitting element, for example a cage with several balls, is arranged inside the cogwheel. As an alternative, the cogwheel may have the form of a truncated cone, i.e. with the pitch angle of less than 90°, wherein the at least one further torque transmitting element is arranged outside the cogwheel.

According to a still further alternative of the inventive gearing mechanism, the at least one further torque transmitting element is a further cogwheel as defined above, wherein the taper of the two cogwheels is opposite. With this arrangement, the shafts of the two cogwheels may be arranged parallel to each other with the end of the first cogwheel having the smaller diameter being located adjacent to the end of the other cogwheel having the larger diameter and vice versa. The two cogwheels may be coupled to each other by a chain or belt engaging the grooves between the teeth of the cogwheels. In this respect the chain or belt may be provided with balls fitting into the respective grooves of the cogwheels. For switching between different transmission ratios, the chain or belt is displaceable in a direction parallel to the first shaft and/or to the second shaft.

The cogwheel according to the present invention and/or the gearing mechanism according to the present invention are suitable to be used in any type of stationary machines or in a vehicle, like a car, a train, a boat or a plane. The provision of a large number of different transmission ratios in the gearing system requiring significantly less space than conventional gearing mechanisms with even less different transmission ratios in combination with the reduced number of required component parts and, consequently, the reduced weight of the gearing mechanism offers several benefits in various areas of application.

Further details and features of the invention may be obtained from the following description of embodiments in conjunction with the drawings, in which
- Figure 1: shows in a schematic perspective view a gearing mechanism according to a first embodiment of the invention,
- Figure 2: shows the gearing mechanism of Figure 1 in a sectional view,
- Figure 3: shows in a schematic top view a cogwheel according to a first embodiment of the invention,
- Figure 4: shows the cogwheel of Figure 3 in a sectional view,
- Figure 5: shows a perspective view of a gearing mechanism with the cogwheel of Figure 3
- Figure 6: shows the gearing mechanism of Figure 5 in a sectional view,
- Figure 7: shows a perspective view of a detail of the gearing mechanism of Figure 5,
- Figure 8: shows the detail of Figure 7 in a sectional view,
- Figure 9: shows the detail of Figure 7 in a further sectional view,
- Figure 10: shows a schematic of different transmission ratios,
- Figure 11: shows in a schematic perspective view a gearing mechanism according to a third embodiment of the invention,
- Figure 12: shows in a schematic perspective view a gearing mechanism according to a fourth embodiment of the invention,
- Figure 13: shows in a schematic perspective view a gearing mechanism according to a fifth embodiment of the invention,
- Figure 14: shows in a schematic sectional view a gearing mechanism according to a sixth embodiment of the invention,
- Figure 15: shows a detail of the gearing mechanism of Figure 14,
- Figure 16: shows a further detail of the gearing mechanism of Figure 14,
- Figure 17: shows in a schematic perspective view a cogwheel according to a further embodiment,
- Figures 18a, b: show a gearing mechanism according to a seventh embodiment of the invention,
- Figures 19a, b: show a gearing mechanism according to an eighth embodiment of the invention,
- Figure 20: shows in a schematic perspective view a gearing mechanism according to a nineth embodiment of the invention, and
- Figures 20a-d: show details of a chain of Figure 20.

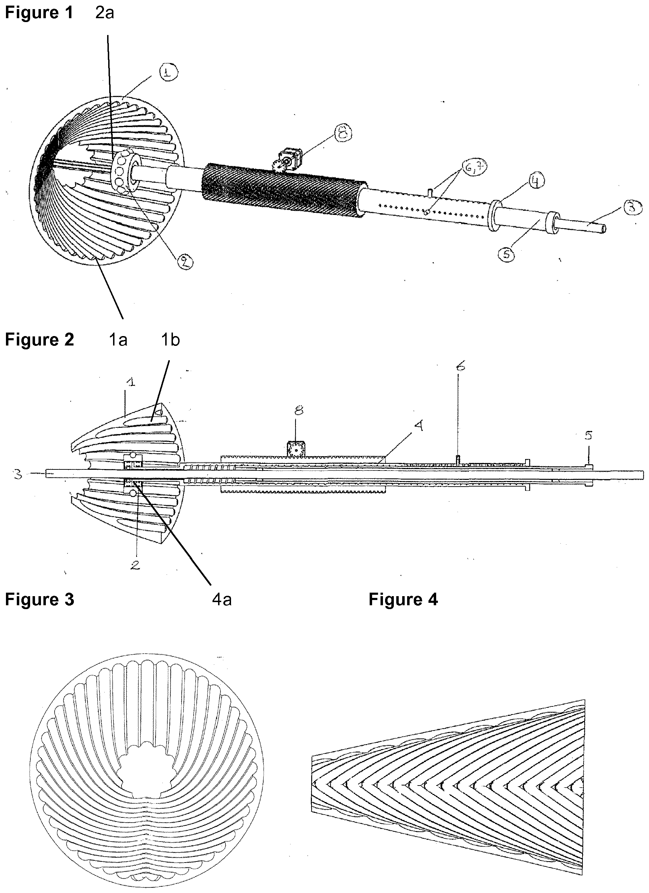

In the embodiment depicted in Figures 1 and 2, a gearing mechanism comprises a bell shaped cogwheel 1, a gear 2, a shaft 3, a stretcher member 4, a cylinder 5, two locking pins 6 and 7, and a step motor 8.

The cogwheel 1 has the first end (left side in Figure 2) and an axially opposite second end. The diameter of the cogwheel 1 is smaller at its first end compared with the diameter at its second end. The cogwheel 1 is provided on a not shown shaft, for example a drive shaft or a driven shaft, which is coaxial with the rotation axis of the cogwheel 1. The cogwheel 1 has a pitch angle of more than 90° resulting in the bell shape with teeth 1a provided at a radially inner surface. The teeth 1a are spaced from each other by grooves 1b. The circular pitch and the circular thickness of the teeth 1a are constant. The number of teeth 1a and grooves 1b decreases form the second axial end to the first axial end of the cogwheel 1. This results in merging of some of the teeth 1a and of some of the grooves 1b.

As can be seen in Figures 3 and 4, the number of the grooves 1b may be 45 at the second end, while the number of the grooves 1b is only 11 at the first end of the cogwheel 1. With the gear 2 having in the depicted example 11 balls or the like protrusions, the transmission ratio between the shaft of the cogwheel 1 and the shaft 3 of the gear 2 is 1:1 if the gear 2 is positioned at the first end of the cogwheel 1, whereas the transmission ratio is approximately 1:4 (exactly 11:45) if the gear 2 is positioned at the opposite second end of the cogwheel 1. Different transmission ratios between 1:1 and 1:4 may be selected by changing the position of gear 2 with respect to cogwheel 1 to the respective position where the number of grooves 1b in the cogwheel 1 corresponds to the desired transmission ratio.

The gear 2 is mounted on shaft 3 and is axially displaceable parallel to shaft 3. The shaft 3 is inclined with respect to the not shown shaft of the cogwheel 1 and extends parallel to the cone-shaped internal surface of the cogwheel 1. The gear 2 comprises a cage 2a retaining several balls 2b or spheres which extend through windows in the cage 2a such that they protrude radially from the cage 2a. The form of the grooves 1b is adapted to the outer shape of the balls 2b such that the balls 2b may engage a groove 1b of the cogwheel 1.The arc length of two continuous grooves 1b on cogwheel 1 in any cross section, except the area where the grooves 1b meet, is the same and equal to the arc length that two continuous balls 2b create in gear 2. This assembly allows sliding of gear 2 with continuous power transmission from a previous to the next (new) position (position of integer number of equal arcs) when the gear 2 is displaced parallel to shaft 3 and relative to cogwheel 1.

Movement of the gear 2 with respect to the cogwheel 1 may be effected by a switching mechanism comprising the stretcher member 4, the cylinder 5, the locking pins 6 and 7, and the step motor 8. The stretcher member 4 is provided with a flanged 4a which is axially constrained in the cage 2a such that an axial movement of the stretcher member 4 is transmitted to the cage 2a and, thus, to the gear 2 with the balls 2b.

In more detail, a rectangular spur rack 4b is provided on top (as seen in Figure 2) of the stretcher member 4 which is in engagement with a gear of the step motor 8. The stretcher member 4 is slidably guided on cylinder 5 which in turn may be fixed in a not shown housing or the like. In other words, the cylinder 5 is stationary and the shaft 3 is rotatably guided in the cylinder 5. Cylinder 5 has spherical pockets where metal spheres 9 or balls are housed. Stretcher member 4 has inner canals so that it can slide, with the help of the motor 8, over the cylinder 5 when a command is being given in order to change gear. Locking pins 6 and 7 are being mechanically locked such that always one of the locking pins is being locked, while the other locking pin is disengaged. The respective locking pin which is engaged or locked secures the position of stretcher member 4 with respect to the cylinder 5. As a result, when the step motor 8 turns its gear, the stretcher member 4 (and the connected gear 2) is being pushed (or pulled) to the next (or previous) position/gear with the help of the rectangular spur rack 4b.

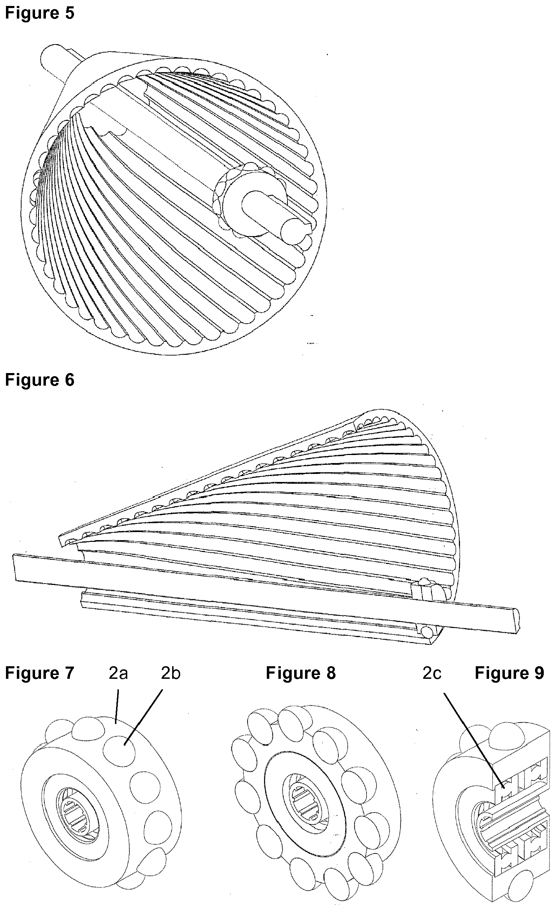

In the embodiment of Figures 3 and 4 the inclination of the cogwheel 1 slightly differs from the embodiment of Figures 1 and 2. The gearing mechanism depicted in Figures 5 and 6 which includes of the cogwheel 1 of the embodiment of Figures 3 and 4 is only shown with shaft 3 and gear 2 without the switching mechanism for moving the gear 2 with respect to the cogwheel 1.

Figures 7 to 9 show an example of the gear 2 in more detail. As can be seen in Figure 9, the cage 2a comprises an outer portion receiving the balls 2b or the like spherical protrusions and extends via a radially orientated portion to an inner portion which is rotationally constrained to the shaft 3 (not shown in Figures 7 to 9). In the annular space between the inner portion and to the outer portion of the cage 2a, there are two ball bearings 2c which are spaced from each other such that flange 4a of the stretcher member 4 may be received between the ball bearings 2c. Thus, rotation of the cage 2a is not transmitted to the stretcher member 4 but the cage 2a is axially constrained to the stretcher member 4.

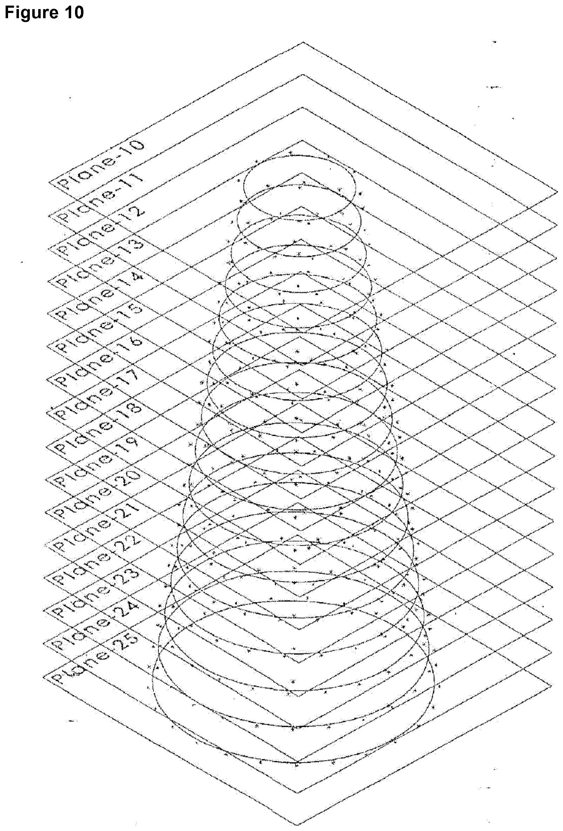

Figure 10 is a schematic depicting the different predefined positions of the gear 2 with respect to the cogwheel 1 which corresponds to different transmission ratios due to the differing number of grooves 1b meshing with the balls 2b of gear 2. As can be seen, a large number of different transmission ratios may be selected with a relatively compact cogwheel 1. The invention proposes a reduction gearing mechanism of continuous power transfer that can be applied e.g. on transmissions of self-propelled vehicles, or to reduction gears with continuous torque transfer.

The invention offers the advantage of the continuous transfer of torque with a much simpler arrangement that is more economic and it also allows the continuous motor operation at the revolution ranges either with the highest efficiency level (minimum special consumption), or the optimal performance (maximum torque). To add to that, it occurs with low maintenance costs and silent motor operation. The number of ratios may be adapted depending of the motor to ensure the motor operation is either on minimum special consumption or maximum torque situations. The proposed invention allows numerous forms of applications on transmissions of motor vehicles, small power boats and continuous power transmission reduction gears. The power is transferred from cogwheel 1 to gear 2 and from there through a splined shaft 3 satisfying the transmission ratio a/b on the specific location, where a is the number of grooves and b is the number of spheres. After the displacement of gear 2 to the next position the transmission ratio evolves to (a±1)/b.

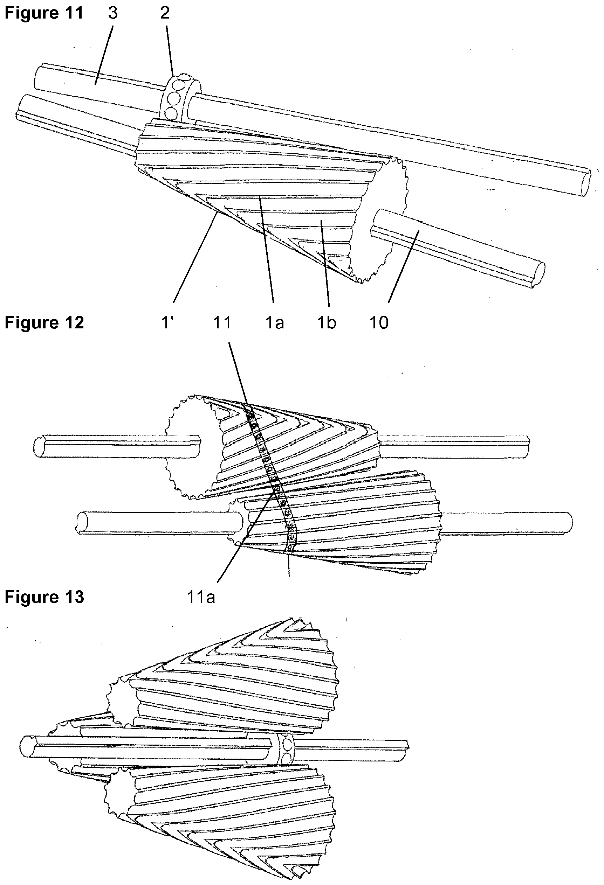

An alternative embodiment is depicted in Figure 11. In contrast to the embodiments of the previous Figures in which the cogwheel 1 is substantially bell-shaped, the cogwheel 1' of Figure 11 has the form of a truncated cone. Cogwheel 1' is rotationally constrained to a shaft 10. In a similar manner as described with respect to the previous embodiments, teeth 1 a and grooves 1b are provided on a pitch surface of the cogwheel 1', wherein the pitch angle of the cogwheel 1' is less than 90°. Again, the number of the teeth 1a and grooves 1b changes from the first end of the cogwheel 1', i.e. the portion with the smaller diameter, to the opposite second end of the cogwheel 1' having the larger diameter. Again, the circular pitch and the circular thickness of the teeth 1a remain constant except for the portions where the teeth 1a or the grooves 1b intersections. In the embodiment depicted in Figure 11, each merging pair of teeth 1a forms a V-shaped intersection and each merging pair of grooves 1b forms a V-shaped intersection.

The gear 2 and the shaft 3 are identical with the embodiment depicted in Figures 5 and 6. As can be seen, shaft 3 is inclined with respect to shaft 10 and is substantially parallel to the outer surface, i.e. the pitch surface, of the cogwheel 1'. The shifting mechanism, for example as depicted in Figures 1 and 2, may be provided for changing the position of gear 2 with respect to cogwheel 1'.

A still further embodiment is depicted in Figure 12. In this embodiment the gear 2 with the cage 2a and the balls 2b is omitted and each of the shafts 3 and 10, respectively, is provided with a cone-shaped cogwheel 1'. The cogwheels 1' may be identical, for example as described with respect to the embodiment of Figure 11, or may vary e.g. in size and/or with respect to the number of teeth 1a and grooves 1b.

The shafts 3 and 10 are arranged parallel to each other and the cogwheel 1' are arranged such that their respective taper is opposite. A chain 11 is provided in closing and connecting both cogwheels 1'. In the depicted embodiment the chain 11 comprises several balls 11a engaging the respective grooves 1b of the cogwheels 1'. The axial position of the chain 11 with respect to the cogwheels 1' may be amended, thereby moving the chain 11 from left to right or vice versa in Figure 12. Different transmission ratios may be selected by changing the position of the chain 11 with respect to the cogwheels 1'. For example, in the position depicted in Figure 12, the chain 11 engages the upper (as seen in Figure 12) cogwheel 1' at a position with a relatively high number of grooves 1b, whereas the chain 11 engages the lower cogwheel 1' at a position with a relatively low number of grooves 1b. Thus, the upper cogwheel 1' will rotate slower compared with the lower cogwheel 1'.

Figure 13 depicts a further embodiment with three cogwheels 1' meshing with a single gear 2, thereby permitting transmission of a relatively high torque due to multiple contact points. The three cogwheels 1' may be coupled with each other to rotate in unison.

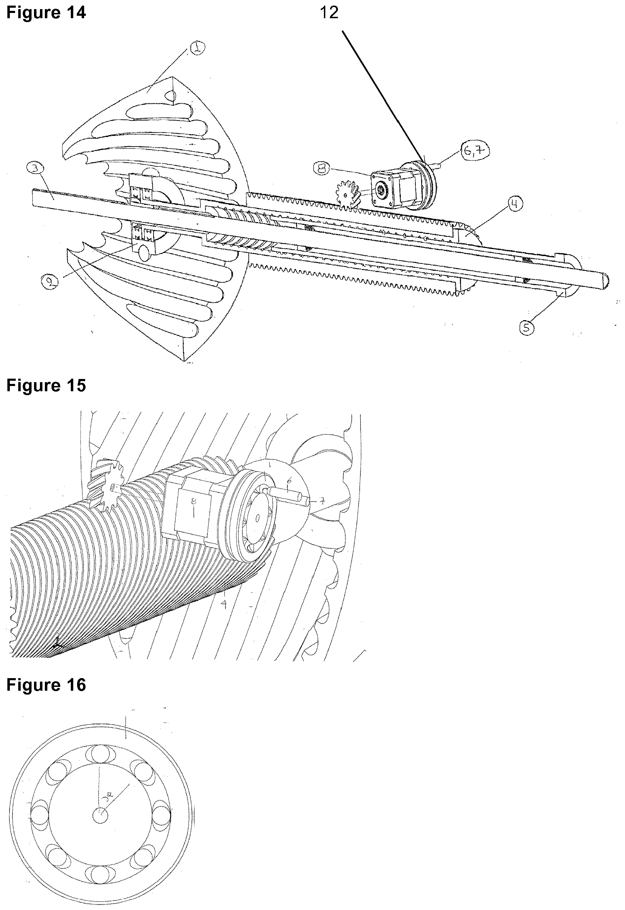

Alternative gear changing or switching mechanism is depicted in Figures 14 to 16. Component parts which are similar to the embodiment depicted in Figures 1 and 2 are denominated with identical reference numerals. The step motor 8 has a disk 12, constantly connected to its axis, which has holes depending on the propulsion step. For example if a gear change in the next, or previous gear/ratio demands movement of the stretcher member 4 by a length equal to a turn of the motor by 1/8 then the disk will have 8 holes. Thus, when a command for changing a gear is being given, the motor turns by a corresponding angle. This turn, pushes the transportation stretcher member 4 and the gear 2 to the next position/gear. Locking pins 6 and 7 are being mechanically locked (always one of the pins is locked) and secure the position of stretcher member 4.

Alternative switching mechanisms may be used instead of the examples described with respect to Figures 1, 2, 14, 15 and 16. For example, the motor 8 may be omitted and the position of the gear 2 or chain 11 may be changed manually or mechanically. Further alternatives may include pneumatic or hydraulic drives for changing the position of gear 2 or chain 11.

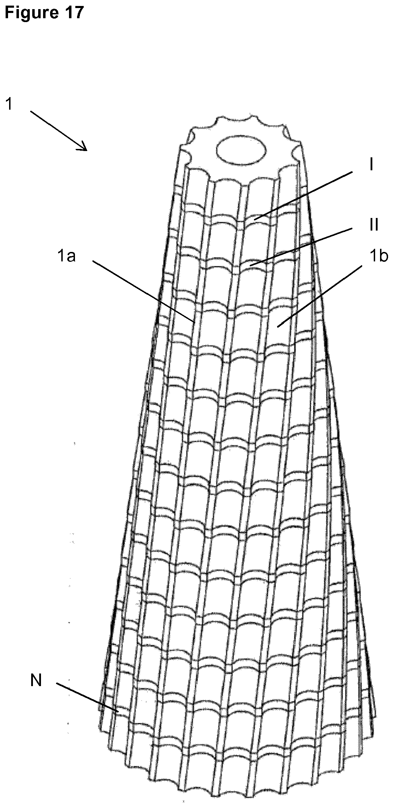

Figure 17 shows in a schematic perspective view a cogwheel 1 according to a further embodiment. The grooves 1b have defined working positions which are indicated with I, II, ..., N. The working positions correspond to planes (see Figure 10) perpendicular to the axis where the circular pitch is constant and the grooves 1b or teeth 1 a do not merge i.e. positions with a given number of uniformly distributed grooves 1b. If gear 2 engages with its spheres 2b grooves 1b of cogwheel 1 in one of the working positions, the arc (circular pitch) of gear 2 perfectly mates with the arc (circular pitch) of the cogwheel. Thus, it is desirable to bring the gear 2 in one of the working positions to select a predefined gearing ratio between cogwheel 1 and gear 2. On the other hand, the arc (circular pitch) of the grooves 1b is substantially constant in transition zones between the working positions such that transmission would be possible. However, irregularities caused e.g. by merging grooves or teeth may occur in these transition zones.

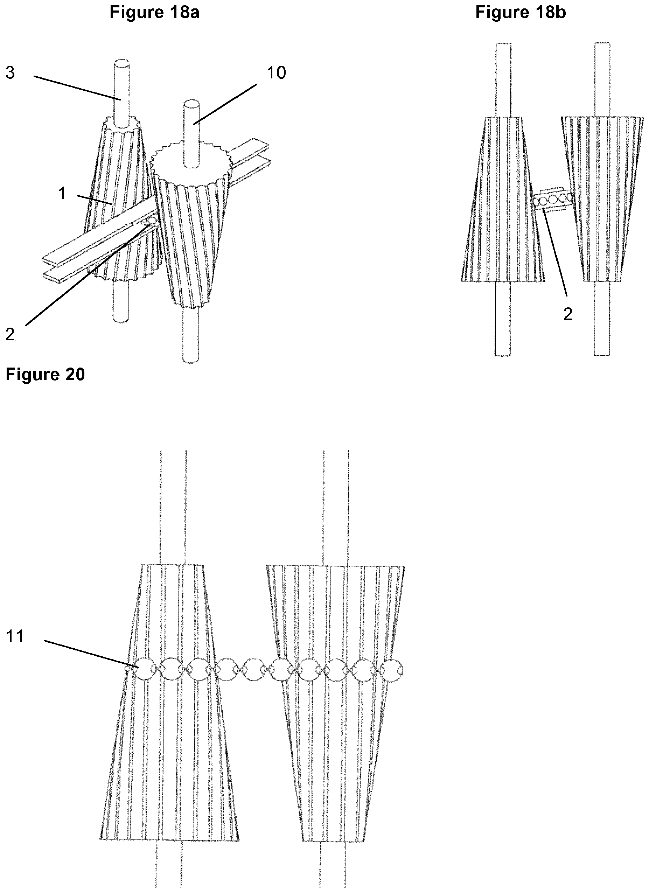

Figures 18a and 18b show a gearing mechanism according to a seventh embodiment of the invention having two cogwheels 1 engaging a gear 2 which is rotatably guided on displaceable bars. In comparison with Figure 12 in which a chain 11 envelopes the cogwheels 1, the gear 2 interposed between the cogwheels 1 has less contact points with the cogwheels but may be easier to displace for changing gearing ratios.

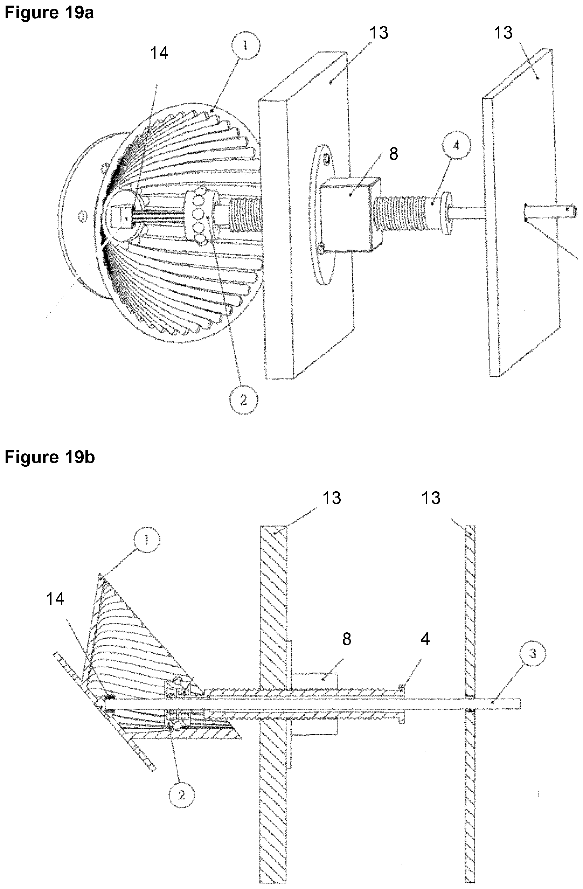

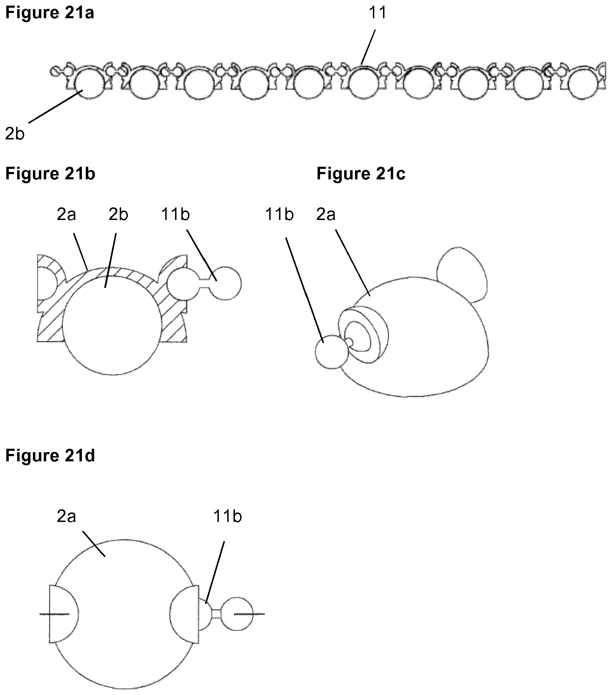

Figures 19a and 19b show a gearing mechanism according to an eighth embodiment of the invention, wherein a gear 2 is provided on an axis 3. The gear 2 engages with its spheres grooves of a cogwheel 1. A stretcher 4 is coupled to the gear 2 such that axial movement parallel to axis 3 is transmitted to gear 2 which may rotate relative to stretcher 4. Stretcher 4 has an external thread meshing with a threaded nut of a motor 8 such that actuation of the motor 8 displaces gear 2 via stretcher 4. The motor 8 may be fixed on a plate of a frame 13. A further plate of frame 13 may provide a bearing for axis 3. The opposite end (left side in Figures 19a and 19b) of axis 3 may be guided in a further bearing 14.

Figure 20 is an embodiment similar to the embodiment of Figure 12, however with a different chain 11. As depicted in Figures 20a to 20d in more detail, this chain comprises several cages 2a each receiving a ball or sphere 2b wherein the cages are linked to each other by swivel joint elements 11b. Each swivel joint element comprises two spheres linked by a bar, wherein each sphere is retained in a bearing portion of the cage 2a. Thus, the chain may not only be bent to adapt to the outer contour of the cogwheels 1 but may also be twisted. Figure 20a shows the chain 11 as a straight line. Figure 20b is a sectional view of a cage 2a with a sphere 2b and a swivel joint element 11b. Figures 2c and 2d are further views on cage 2a.

### Reference Numerals

- 1,1': cogwheel
- 1a: tooth-like web portion
- 1b: groove
- 2: gear
- 2a: cage
- 2b: ball
- 2c: bearing
- 3: shaft
- 4: stretcher member
- 4a: flange
- 5: cylinder
- 6,7: pin
- 8: step motor
- 9: sphere
- 10: shaft
- 11: chain
- 11a: ball
- 11b: swivel joint elements
- 12: disk
- 13: frame
- 14: bearing

## Claims

1. Cogwheel for a gearing mechanism, the cogwheel having an axis, a first axial end, an axially opposite second axial end and a pitch surface extending between the first axial end and the second axial end, wherein the pitch surface comprises several grooves (1b) spaced by tooth-like web portions (1a) and wherein the pitch surface is at least substantially cone-shaped such that the diameter of the pitch surface at the first axial end is smaller than the diameter of the pitch surface at the second axial end, **characterized in that** the circular pitch of the grooves (1b) on the pitch surface is at least substantially constant and that the number of grooves (1b) at the first axial end is smaller than the number of grooves (1b) at the second axial end such that some of the grooves (1b) merge between the first axial end and the second axial end.

2. Cogwheel according to claim 1, **characterized in that** the pitch angle is less than 90° with the tooth-like web portions (1a) provided at a radially outer surface or that the pitch angle is more than 90° with the tooth-like web portions (1a) provided at a radially inner surface.

3. Cogwheel according to claim 1 or 2, **characterized in that** the circular pitch of the grooves (1b) is constant at different axially spaced working positions, wherein the grooves (1b) merge outside the working positions.

4. Cogwheel according to any one of the preceding claims, **characterized in that** the grooves (1b) between the tooth-like web portions (1a) are formed for receiving at least one torque transmitting ball (2b).

5. Gearing mechanism for transmitting torque between a first shaft (10) and a second shaft (3), wherein the gearing mechanism comprises at least one cogwheel (1, 1') according to any one of the preceding claims which is rotationally fixed to the first shaft (10) and at least one further torque transmitting element (2, 1') which is rotationally fixed to the second shaft (3) and meshes with the cogwheel (1, 1').

6. Gearing mechanism according to claim 5, **characterized in that** the first shaft (10) is inclined with respect to the second shaft (3).

7. Gearing mechanism according to claim 6, **characterized in that** the second shaft (3) extends parallel to the pitch surface of the cogwheel (1').

8. Gearing mechanism according to any one of claims 5 to 7, **characterized in that** the at least one further torque transmitting element (2) comprises a cage (2a) with several balls (2b) extending partially through radially open windows of the cage (2a), wherein the cage (2a) is rotationally fixed to the second shaft (3).

9. Gearing mechanism according to any one of claims 5 to 8, **characterized in that** the at least one further torque transmitting element (2) is displaceable with respect to the cogwheel (1, 1') in a direction parallel to the second shaft (3).

10. Gearing mechanism according to claims 8 and 9, **characterized in that** the second shaft (3) is at least partially mounted in a hollow switching shaft (4) which is axially constrained to the cage (2a) and rotatable relative to the cage (2a).

11. Gearing mechanism according to any one of claims 5 to 10 further comprising a switching mechanism (4, 5, 6, 7, 8, 9) for switching between different gear ratios of the first shaft (10) and the second shaft (3), wherein the switching mechanism comprises at least one drive component (8) for changing the position of the at least one further torque transmitting element (2) with respect to the cogwheel (1, 1').

12. Gearing mechanism according to claim 11, **characterized in that** the switching mechanism (4, 5, 6, 7, 8, 9) comprises a locking mechanism (6, 7, 9) for locking the at least one further torque transmitting element (2) in at least two different predefined positions with respect to the cogwheel (1, 1').

13. Gearing mechanism according to any one of claims 5 to 12, **characterized in that** the cogwheel (1) is bell-shaped with a pitch angle of more than 90°, wherein the at least one further torque transmitting element (2) is arranged inside the cogwheel (1).

14. Gearing mechanism according to any one of claims 5 to 12, **characterized in that** the at least one further torque transmitting element is a further cogwheel (1') according to any one of claims 1 to 4, wherein the taper of the two cogwheels (1') is opposite and wherein the two cogwheels (1') are coupled to each other by a chain (11) or belt which is displaceable in a direction parallel to the first shaft (10) and/or to the second shaft (3).

15. Use of a cogwheel (1, 1') according to any one of claims 1 to 4 and/or a gearing mechanism according to any one of claims 5 to 14 in a stationary machine or a vehicle.
